# EUROPEAN PATENT APPLICATION

(11) **EP 4 123 892 A1**
(43) Date of publication of application: **25.01.2023**
(21) Application number: 22186223.8
(22) Date of filing: 21.07.2022
(51) Int. Cl.: H02M 1/00, H02M 3/335, H02M 3/00

(54) **CONTROL CIRCUIT, RESONANT CONVERTER AND INTEGRATED CIRCUIT**

(30) Priority: 21.07.2021 CN 202110824240
(71) Applicant: Silergy Semiconductor Technology (Hangzhou) Ltd, Hangzhou, Zhejiang 310051 (CN)
(72) Inventor: CHEN, Chaojun, HANGZHOU, 310051 (CN); DENG, Jian, HANGZHOU, 310051 (CN); JIN, Jin, HANGZHOU, 310051 (CN)
(74) Representative: Ström & Gulliksson AB

(57) **Abstract**

A resonant converter, and a control circuit for the resonant converter are provided. A resonant current of the resonant converter is sampled and sent to the control circuit for integration so as to control the charge of the resonant converter. Further, the feed-forward current is introduced and integrated together with the sampled resonant current. Therefore, when the output power reaches the minimum value due to the charge control, the output power is further reduced, such that the resonant converter smoothly transitions from the charge control to the equivalent frequency control, which further improves the system efficiency and can realize the application of a wide output range.

## Description

### FIELD

The present disclosure relates to the technical field of power electronics, particularly to power conversion, and more particularly to a control circuit, a resonant converter and an integrated circuit control chip.

### BACKGROUND

Compared with traditional switching converters, resonant converters have the advantages of low switching loss, high conversion efficiency and high-power density. Resonant converters usually provide two control methods: frequency control and charge control. When the frequency control method for the resonant converter is utilized, the limited bandwidth resonant converter is poor in dynamic response, which affects the system performance. The charge control method directly controls the input charge and the output power, which simplifies the loop structure, and therefore is beneficial to the loop compensation design, and can achieve higher bandwidth.

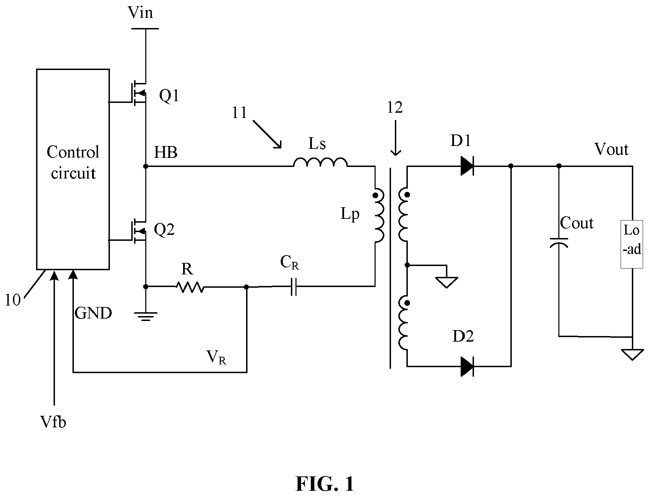

FIG. 1 is a schematic block diagram showing an example resonant converter adopting the charge control. As shown in FIG. 1, the resonant converter is configured as a half-bridge resonant converter as an example. The half-bridge resonant converter includes power transistors Q1 and Q2 connected in series between an input voltage Vin and reference ground GND, and the power transistors Q1 and Q2 are driven by a control circuit 10. The resonant converter also includes a transformer 12, a resonant capacitor C_{R} and an inductor Ls that are connected in series with a primary winding Lp of the transformer 12 between a common node HB of the power transistors Q1 and Q2 and the reference ground GND, thereby forming a resonant circuit 11. The two secondary windings of the transformer 12 are respectively connected with diodes D1 and D2 to form a full-wave rectifier circuit. The cathodes of the diodes D1 and D2 are both connected to an output terminal of the resonant converter. An output capacitor Cout and a load are connected in parallel between the output terminal of the resonant converter and the secondary reference ground, in order to generate output voltage Vout at the output terminal of the resonant converter. In addition, the resonant converter also includes a resistor R, which is connected in series in the resonant circuit 11 to sample a resonant current, thereby obtaining a sampling voltage V_{R} representing the input charge. Control circuit 10 controls the output power according to the sampling voltage V_{R} and an output feedback signal Vfb.

As the output power of the resonant converter decreases, the window size of the charge control decreases to the minimum value. In order to improve the efficiency at a light load, the Burst mode is generally switched to, and the resonant converter operates continuously for several cycles and then shuts down several times according to the load conditions, so as to reduce the output power, resulting in transformer noise and flickering problems in LED applications.

### SUMMARY

In view of this, the present disclosure provides a control circuit, a resonant converter and an integrated circuit chip. By introducing a feed-forward current which is integrated together with a resonant current, the resonant converter can smoothly transition from a charge control mode to a frequency control mode in case of a light load, such that the power point when switching to the Burst mode is further reduced, the system efficiency is improved, and the application of the wide output range can be realized.

In a first aspect, there is provided a control circuit for a resonant converter. The control circuit includes:
a feed-forward circuit configured to generate a feed-forward current;
a charge feedback circuit configured to receive a resonant current sampling signal representing a resonant current of the resonant converter to generate a charge feedback signal in a first mode, and receive the resonant current sampling signal and the feed-forward current to generate the charge feedback signal in a second mode; and
a driving control circuit configured to generate a driving signal based on the charge feedback signal and a first threshold signal, to control an on-off state of a power transistor of the resonant converter, where the first threshold signal is generated based on an error compensation signal representing error information between a feedback signal of an output signal of the resonant converter and a reference signal.

In an embodiment, in the first mode, the feed-forward circuit is configured to not generate the feed-forward current, and the control circuit is configured to operate in a charge control mode to adjust an output power of the resonant converter by changing an input charge of the resonant converter, where a switching frequency of the resonant converter remains unchanged.

In an embodiment, in the second mode, the feed-forward circuit is configured to be enabled to generate the feed-forward current, and the control circuit is configured to operate in an equivalent frequency control mode to adjust an output power of the resonant converter by changing a switching frequency of the resonant converter.

In an embodiment, the control circuit is configured to operate in the first mode until the first threshold signal decreases to a minimum value, and the control circuit is configured to operate in the second mode when the first threshold signal reaches the minimum value.

In an embodiment, the feed-forward current changes inversely to the error compensation signal, such that a value of the feed-forward current increases as a desired output power decreases.

In an embodiment, the control circuit further includes:
a conversion circuit configured to receive an error current signal representing the error compensation signal transmitted from a secondary side of the resonant converter, and generate the first threshold signal based on a corresponding relationship.

In an embodiment, the conversion circuit is configured to generate the first threshold signal based on a preset power curve related to the error current signal.

In an embodiment, the conversion circuit is configured to convert the error current signal into a voltage signal, and generate the first threshold signal based on a preset power curve related to the voltage signal.

In an embodiment, the conversion circuit is configured to generate a compensation signal based on an error between the error current signal and the reference signal, and generate the first threshold signal based on a preset power curve related to the compensation signal.

In an embodiment, the first threshold signal remains unchanged in a case that the error current signal is smaller than a first current. The first threshold signal decreases as the error current signal increases in a case that the error current signal is greater than the first current and smaller than a second current, and decreases to a minimum value when the error current signal reaches the second current. The first threshold signal remains at the minimum value in a case that the error current signal is greater than the second current.

In an embodiment, in a case that the error current signal is greater than a second current, the feed-forward current increases as the error current signal increases until the error current signal increases to a maximum error current, where the second current is a value of the error current signal when the first threshold signal decreases to a minimum value.

In an embodiment, the charge feedback circuit includes:
a current sampling circuit configured to receive the resonant current sampling signal and convert the resonant current sampling signal into an integration current; and
a current integration circuit configured to integrate the integration current and the feed-forward current to generate the charge feedback signal.

In an embodiment, the current integration circuit is configured to: integrate the integration current during half of each switching cycle in the first mode; and integrate the integration current and the feed-forward current during half of each switching cycle in the second mode.

In an embodiment, the current integration circuit is configured to: integrate the integration current and the feed-forward current to generate the charge feedback signal across an integration capacitor during half of the switching cycle in the second mode; and control the integration capacitor to discharge to zero during the other half of the switching cycle in the second mode.

In an embodiment, in the second mode, in a case that the integration current and the feed-forward current are integrated in a time period during which the first power transistor of the resonant converter is on, the feed-forward current flows into the integration capacitor; and in a case that the integration current and the feed-forward current are integrated in a time period during which the second power transistor of the resonant converter is on, the feed-forward current flows out of the integration capacitor, where the first power transistor and the second power transistor are connected in series between an input terminal and reference ground.

In an embodiment, the current integration circuit is configured to: integrate the integration current during the switching cycle in the first mode; and integrate the integration current and the feed-forward current during the switching cycle in the second mode.

In an embodiment, in the second mode, in a time period during which the first power transistor of the resonant converter is on, the feed-forward current generated by the feed-forward circuit flows into the integration capacitor; and in a time period during which the second power transistor of the resonant converter is on, the feed-forward current generated by the feed-forward circuit flows out of the integration capacitor, where the first power transistor and the second power transistor are connected in series between an input terminal and reference ground.

In an embodiment, the driving control circuit is configured to compare the charge feedback signal with the first threshold signal to generate a signal for controlling the power transistor in the resonant converter to turn off.

In an embodiment, the driving control circuit is configured to: generate a signal for controlling the first power transistor in the resonant converter to turn off when the charge feedback signal increases to be greater than a second threshold signal; and generate a signal for controlling the first power transistor to turn on when the charge feedback signal decreases to be less than a third threshold signal, where the second threshold signal is a difference between a bias signal and the first threshold signal, and the third threshold signal is a sum of the bias signal and the first threshold signal, and the first power transistor and the second power transistor are connected in series between an input terminal and reference ground.

In a second aspect, there is provided a resonant converter. The resonant converter includes:
the control circuit according to any one of the above embodiments;
a main power circuit including a first power transistor and a second power transistor connected in series between an input terminal and reference ground;
a transformer including a primary winding and at least one secondary winding;
a resonant capacitor coupled in series with the primary winding to form a resonant unit; and
an output feedback circuit configured to integrate and compensate an error between the feedback signal and the reference signal to generate the error compensation signal and transmit the error compensation signal to the control circuit.

In an embodiment, the output feedback circuit includes:
a transfer circuit configured to convert the error compensation signal into the error current signal and transfer the error current signal to the control circuit.

In an embodiment, the resonant converter further includes:
a current acquisition circuit configured to acquire the resonant current sampling signal by connecting a resistor in series in the resonant unit.

In an embodiment, the resonant converter further includes:
a current acquisition circuit, where the current acquisition circuit includes a first capacitor and a first resistor connected in series to form a branch, and the branch is connected in parallel with the resonant capacitor of the resonant converter and is configured to generate the resonant current sampling signal on the first resistor, where a capacitance value of the first capacitor is smaller than a capacitance value of the resonant capacitor.

Compared with the conventional technology, the feed-forward current is introduced into the charge control of the resonant converter, and is integrated with the sampled resonant current, so as to perform frequency compensation for the charge control under the light load, thereby reducing the power point when the resonant converter switches to the Burst mode. Further, in the application of the wide output range, the resonant converter can still have a lower Burst operating point at low voltage output.

### BRIEF DESCRIPTION OF THE DRAWINGS

The above and other objects, features and advantages of the present disclosure will be more apparent by the description of preferred embodiments of the present disclosure with reference to the accompanying drawings. In the drawings:
FIG. 1 is a schematic block diagram illustrating an example resonant converter adopting the charge control according to the conventional technology;
FIG. 2 is a schematic block diagram illustrating an example resonant converter according to an embodiment of the present disclosure;
FIG. 3 is a schematic block diagram illustrating an example output feedback circuit in the control circuit according to an embodiment of the present disclosure;
FIG. 4 is a diagram illustrating an example preset power curve in the control circuit according to an embodiment of the present disclosure;
FIG. 5 is a diagram illustrating an example feed-forward current waveform generated by a feed-forward circuit according to an embodiment of the present disclosure;
FIG. 6 is a schematic block diagram illustrating a first example control circuit according to an embodiment of the present disclosure;
FIG. 7 is a schematic block diagram illustrating a second example control circuit according to an embodiment of the present disclosure;
FIG. 8 is a diagram illustrating an example operation waveform of the second example control circuit according to an embodiment of the present disclosure.

### DETAILED DESCRIPTION OF EMBODIMENTS

The present disclosure is described below based on the preferred embodiments. In the description below, a number of particular details are explained to provide a better understanding to the present disclosure. However, it is apparent to those skilled in the art that the present disclosure can be implemented without these particular details, that is, the present disclosure is not limited to the embodiments. Well known methods, processes, flows, components and circuits are not described in detail so as not to obscure the essence of the present disclosure.

The same elements in each drawing are represented by similar reference signs. Further, it should be understood by those skilled in the art that, the drawings herein are only for illustration, and are not necessarily drawn to scale.

Further, it should be understood that in the following description, "circuit" refers to a loop that conducts electricity and is formed by at least one element or sub-circuit through electrical connection or electromagnetic connection. In a case that an element or circuit is referred to as being "connected" to another element or an element/circuit is referred to as being "connected" between two nodes, the element or circuit may be directly coupled or connected to another element or via another element. The connection between elements may be physical, logical, or a combination thereof. In a case that an element is referred to as being "directly coupled" or "directly connected" to another element, there is no other element between the element and.

Unless clearly required by the context, words such as "including", "comprising" and the like throughout the specification and claims should be construed as inclusive rather than exclusive or exhaustive, that is, "including but not limited to".

In the description of the present disclosure, it should be understood that the terms "first", "second" and the like are for illustrative purposes only, and should not be construed as indicating or implying relative importance. Further, in the description of the present disclosure, unless otherwise specified, "multiple" means two or more.

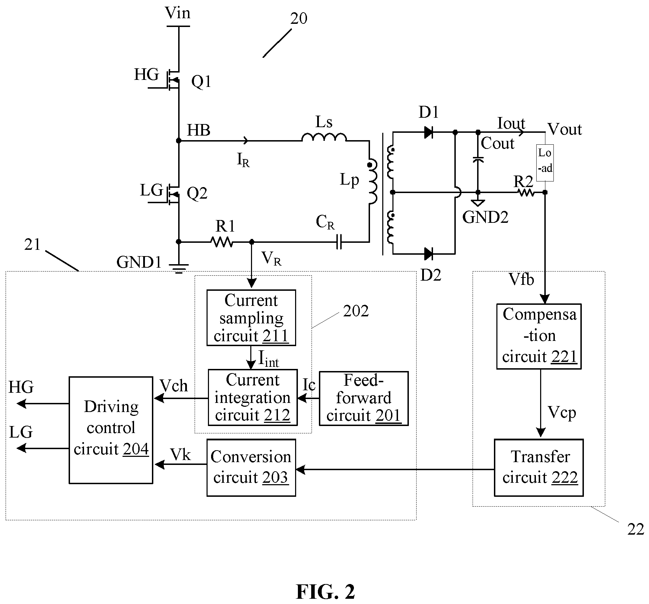

FIG. 2 is a schematic block diagram illustrating an example resonant converter according to an embodiment of the present disclosure. As shown in FIG. 2, this example resonant converter includes a main power circuit 20, a control circuit 21 at a primary side, and an output feedback circuit 22 at a secondary side. Here, the main power circuit 20 is described by taking a half-bridge resonant converter structure as an example. The main power circuit 20 includes: a first power transistor Q1 and a second power transistor Q2 that are connected in series between an input voltage Vin and a primary side reference ground GND1; and a resonant unit. The resonant unit includes an inductor Ls, a primary winding Lp of a transformer and a resonant capacitor C_{R} that are connected in series between a common node HB of the first power transistor Q1 and the second power transistor Q2 and the primary side reference ground GND1, such that the resonant unit is formed when a corresponding one of the power transistors is on. In this embodiment, a resistor R1 is connected in series in the resonant unit to sample a resonant current I_{R}. Further, a first terminal of the resistor R1 is connected to the resonant capacitor C_{R}, and a second terminal of the resistor R1 is connected to the primary side reference ground GND1. It should be understood that the inductor Ls may be a leakage inductor of the primary winding Lp or an additional auxiliary inductor, and the positions of the inductor Ls and the resonant capacitor C_{R} are not limited to this, and as long as the inductor Ls and the resonant capacitor C_{R} are connected in series in the resonant unit. The transformer includes two secondary windings at the secondary side, which are respectively connected with diodes D1 and D2 to form a full-wave rectifier circuit. Cathodes of the diodes D1 and D2 are both connected to an output terminal of the resonant converter. An output capacitor Cout and a load are connected in parallel between the output terminal of the resonant converter and secondary side reference ground GND2.

Further, the output feedback circuit 22 is configured to perform integration compensation according to an error between a sampled feedback signal Vfb representing an output signal (e.g., an output voltage or an output current) of the resonant converter and a reference signal, so as to generate an error compensation signal Vcp and transmit the generated error compensation signal Vcp to the control circuit 21 at the primary side.

Further, the output feedback circuit 22 includes a compensation circuit 221 and a transfer circuit 222. The compensation circuit 221 generates the error compensation signal Vcp at the secondary side according to the error between the feedback signal Vfb and the reference signal. The transfer circuit 222 transmits information of the error compensation signal Vcp generated at the secondary side to the control circuit 21 at the primary side. In this embodiment, the transfer circuit 222 converts the error compensation signal Vcp into an error current signal I_{FBL} in the form of a current and transmits the converted error current signal I_{FBL} to the primary side.

It should be understood that the output signal here may be an output voltage Vout or an output current lout, and the control object may be determined according to the actual requirement of constant current output or constant voltage output. In this embodiment, the sampled output current lout is taken as an example for description by connecting a resistor R2 in series between the load and the secondary side reference ground GND2.

In an embodiment, the control circuit 21 includes a feed-forward circuit 201, a charge feedback circuit 202, a conversion circuit 203 and a driving control circuit 204.

In this embodiment, the charge feedback circuit 202 is configured to: integrate the resonant current sampling signal V_{R} representing the resonant current I_{R} of the resonant converter to generate a charge feedback signal Vch in a first mode; and integrate the resonant current sampling signal V_{R} and a feed-forward current Ic generated by the feed-forward circuit 201 to generate a charge feedback signal Vch in a second mode. That is, in the first mode, the feed-forward circuit 201 is disabled and fails to generate the feed-forward current Ic. In the second mode, the feed-forward circuit 201 is enabled, and generates the feed-forward current Ic successfully. In the first mode, the control circuit 21 is in the charge control mode, so as to adjust the output power of the resonant converter by changing the input charge of the resonant converter, and the switching frequency of the resonant converter remains unchanged. In the second mode, due to the addition of the feed-forward compensation, the control circuit 21 transitions from the charge control mode to the equivalent frequency control mode, and further adjust the output power of the resonant converter by changing the switching frequency of the resonant converter.

In an embodiment, the charge feedback circuit 202 includes a current sampling circuit 211 and a current integration circuit 212. The current sampling circuit 211 is configured to receive the resonant current sampling signal V_{R} and convert the received resonant current sampling signal V_{R} into an integration current lint in the form of a current. Here the integration current lint and the resonant current I_{R} have the same change trend. The current integration circuit 212 is connected to an output terminal of the current sampling circuit 211, and is configured to integrate the integration current lint and the feed-forward current Ic that is generated by the feed-forward circuit 201 in respective operation modes, to generate the charge feedback signal Vch. In one control mode, for each switching cycle, the current integration circuit 212 integrates the integration current lint only within half of the switching cycle. In another control mode, for each switching cycle, the current integration circuit 212 integrates the integration current lint during the entire switching cycle. The detailed control method will be explained below.

It should be understood that the resonant converter further includes a current acquisition circuit to sample the resonant current I_{R}. In this embodiment, the current acquisition circuit samples the resonant current by connecting the resistor R1 in series in the resonant unit, and the resonant current sampling signal V_{R} is generated at one terminal of the resistor R1. It should be understood that other current acquisition circuits capable of realizing the above functions can be used in this embodiment. For example, the current acquisition circuit includes a branch formed by connecting a capacitor and a resistor in series. The branch is connected in parallel with the resonant capacitor C_{R}. The capacitance value of the capacitor is smaller than that of the resonant capacitor C_{R}, and a resonant current sampling signal V_{R} through the resistor has the same change tangency as the resonant current I_{R}, and has a smaller value than the resonant current I_{R}, thereby reducing the loss of the sampling resistor.

In an embodiment, the conversion circuit 203 is configured to convert a signal outputted from the transfer circuit 222 into a first threshold signal Vk according to a corresponding relationship. The first threshold signal Vk has the same change trend as the error compensation signal Vcp.

In an embodiment, the driving control circuit 204 generates driving signals HG and LG according to the charge feedback signal Vch and the first threshold signal Vk, so as to control on-off states of the power transistors Q1 and Q2 respectively. Specifically, the driving control circuit 204 compares the charge feedback signal Vch and the first threshold signal Vk to generate a corresponding driving signal, to control the on-off states of the power transistors Q1 and Q2, thereby controlling the resonant converter to realize energy conversion. The driving signals HG and LG are complementary to each other. The power transistor Q1 is on for a time period equal to a time period during which the power transistor Q2 is on, and the time period is substantially equal to half of the switching cycle. It should be understood that in order to prevent power transistors Q1 and Q2 from being on at the same time, dead time is set between the driving signals HG and LG That is, the power transistor Q2 is turned on immediately after the power transistor Q1 is turned off for the dead time, and the power transistor Q1 is turned on immediately after the power transistor Q2 is turned off for the dead time.

The feed-forward circuit 201, the charge feedback circuit 202, the conversion circuit 203 and the driving control circuit 204 are integrated in the same integrated circuit control chip. A first input pin of the integrated circuit control chip receives resonant current sampling signal V_{R}, and a second input pin of the integrated circuit control chip receives a signal containing the information of the error compensation signal Vcp transmitted by the transfer circuit 222. Here, the signal is the error current signal I_{FBL}.

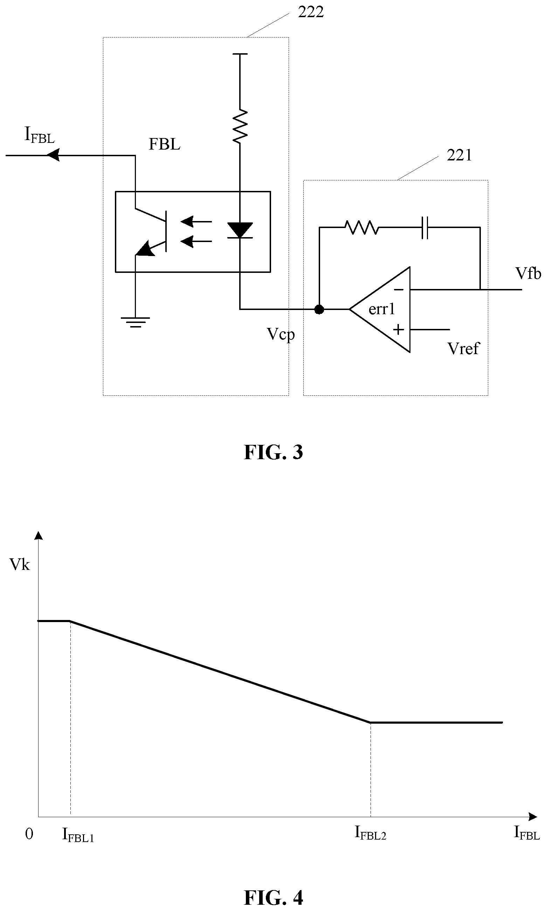

FIG. 3 is a schematic block diagram illustrating an example output feedback circuit in the control circuit according to an embodiment of the present disclosure. An element with the same circuit structure as that in FIG. 2 has the same reference numeral. As shown in FIG. 3, the compensation circuit 221 in the output feedback circuit 22 includes an error amplifier err1, which receives the feedback signal Vfb and the reference signal Vref. A compensation network is connected between an inverting input terminal and an output terminal of the error amplifier err1. In this embodiment, the compensation network includes a resistor and a capacitor connected in series to form a negative feedback loop, such that the error between the feedback signal Vfb and the reference signal Vref is integrally compensated to generate the error compensation signal Vcp. The transfer circuit 222 may be implemented with an opt-coupler, to convert the error compensation signal Vcp into the error current signal I_{FBL} and transmit the error current signal I_{FBL} to the primary side. The output terminal FBL of the opt-coupler is connected to the second input pin of the integrated circuit control chip.

Further, the conversion circuit 203 in the control circuit generates the first threshold signal Vk based on the error current signal I_{FBL} according to the corresponding relationship.

In this embodiment, the conversion circuit 203 generates the first threshold signal Vk according to a preset power curve related to the error current signal I_{FBL} and the first threshold signal Vk. FIG. 4 is a diagram illustrating an example preset power curve according to an embodiment of the present disclosure. As shown in FIG. 4, in a first current interval (e.g., an interval from 0- to I_{FBL1}), the first threshold signal Vk remains unchanged. In a second current interval (e.g., an interval from I_{FBL1} to I_{FBL2}), the first threshold signal Vk decreases with the increase of the error current signal I_{FBL}. In some embodiments, the first threshold signal Vk is linearly decreased with the increase of the error current signal I_{FBL}. It should be understood that the first threshold signal Vk may also be non-linearly decreased. In a third current interval, that is, since the error current signal I_{FBL} is greater than the second current I_{FBL2}, the first threshold signal Vk remains unchanged. It should be understood that the power curve may be designed according to actual circuit requirements, and its form is not limited to this.

In addition, there are many ways for the conversion circuit 203 to generate the first threshold signal Vk based on the error current signal I_{FBL} and the preset power curve. For example, the conversion circuit 203 may convert the error current signal I_{FBL} into a voltage signal first, and then generate the first threshold signal Vk based on the corresponding power curve and the voltage signal. In addition, the conversion circuit 203 may generate a compensation signal by compensating the error between the error current signal I_{FBL} and a reference signal, and then generate the first threshold signal Vk based on the corresponding power curve and the compensation signal. It should be understood that conversion circuit 203 may adopt an analog circuit or a digital circuit to realize the conversion of the power curve, which is not limited herein.

It should be understood that when the error current signal I_{FBL} is greater than the second current I_{FBL2}, the first threshold signal Vk is reduced to a minimum value, and thereafter the first threshold signal Vk remains at the minimum value, such that the charge control window cannot be changed any more. That is, the resonant converter generates minimum output power in the charge control mode, thus it impossible to adopt the charge control method to further reduce the output power when less output power is required. Therefore, the embodiments of the present disclosure further reduce the output power by changing the switching frequency by introducing feed-forward compensation to meet the load requirements.

In summary, in the first mode (e.g., until the first threshold signal Vk is reduced to the minimum value), the feed-forward circuit 201 does not generate the feed-forward current Ic, and the charge feedback circuit 202 integrates only the resonant current sampling signal representing the resonant current of the resonant converter, so as to generate the charge feedback signal Vch. In the second mode (e.g., since the first threshold signal Vk is reduced to the minimum value), the feed-forward circuit 201 is enabled and generates the feed-forward current Ic successfully, and the charge feedback circuit 202 integrates the resonant current sampling signal and the feed-forward current Ic together, so as to generate the charge feedback signal Vch.

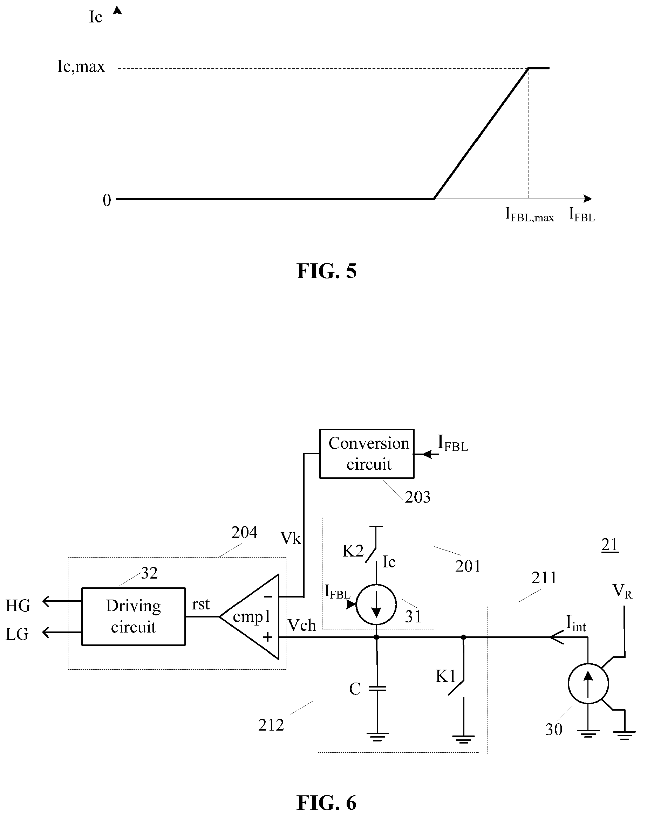

FIG. 5 is a diagram illustrating an example feed-forward current waveform generated by the feed-forward circuit according to an embodiment of the present disclosure. As shown in FIG. 5, until the error current signal I_{FBL} reaches the second current I_{FBL2}, no feed-forward current Ic is generated. That is, in this interval, the charge feedback signal Vch depends on only the integration current lint. When the error current signal I_{FBL} is greater than the second current I_{FBL2}, the feed-forward current Ic starts to increase with the increase of the error current signal I_{FBL}. Here the feed-forward current Ic increases linearly with the error current signal I_{FBL}. It should be understood that the feed-forward current Ic may also increase nonlinearly with the error current signal I_{FBL}, and the present disclosure does not make any limitation to this. Since the change trend of the error current signal I_{FBL} is opposite to the change trend of the error compensation signal Vcp, the change trend of the feed-forward current Ic is opposite to the change trend of the error compensation signal Vcp, so that the value of the feed-forward current Ic increases with the decrease of the required output power. Here the second current I_{FBL2} is the value of the error current signal I_{FBL} when the first threshold signal Vk decreases to the minimum value. When the error current signal I_{FBL} reaches the maximum current threshold I_{FBL,max}, the feed-forward current Ic increases to the maximum value I_{c,max} of the feed-forward current, and thereafter the feed-forward current Ic remains at the maximum value I_{c,max}.

FIG. 6, is a schematic block diagram illustrating a first example control circuit according to an embodiment of the present disclosure. An element with the same circuit structure as that in FIG. 2 has the same reference numeral. In each switching cycle, the current integration circuit 212 integrates the resonant current I_{R} in only half of the switching cycle as an example for description. In the first mode, that is, until the first threshold signal Vk is reduced to the minimum value, in each switching cycle, the control circuit 21 integrates the integration current lint representing the resonant current I_{R} in only half of the switching cycle so as to generate a charge feedback signal Vch. In the second mode, that is, since the first threshold signal Vk is reduced to the minimum value (e.g., since the error current signal I_{FBL} is greater than the second current I_{FBL2}), in each switching cycle, the control circuit 21 operates the feed-forward compensation on the resonant current I_{R} in only half of the switching cycle, such that the integration current lint representing the resonant current I_{R} and the feed-forward current Ic are integrated together to generate a charge feedback signal Vch.

Further, the current sampling circuit 211 includes a voltage-controlled current source 30. A first control terminal of the voltage-controlled current source 30 receives the resonant current sampling signal V_{R}, and a second control terminal of the voltage-controlled current source 30 is connected to the reference ground. The voltage-controlled current source 30 is controlled based on the resonant current sampling signal V_{R} to output the integration current lint. The integration current lint changes with the resonant current I_{R}. The current integration circuit 212 includes an integration capacitor C and a switch K1 connected in parallel. A first terminal of the integration capacitor C is connected to an output terminal of the voltage-controlled current source 30, and a second terminal of the integration capacitor C is connected to the reference ground. The feed-forward circuit 201 is enabled to generate the feed-forward current Ic since the error current signal I_{FBL} is greater than the second current I_{FBL2}. In a case that the resonant current is integrated when only the power transistor Q1 is on, the feed-forward current Ic flows into the integration capacitor C. In this case, the feed-forward circuit 201 includes a controlled current source 31 and a switch K2 connected in series between an internal power supply and the first terminal of integration capacitor C. Here the controlled current source 31 is controlled based on the error current signal I_{FBL}, and generates, when switch K2 is on, the feed-forward current Ic that increases with the increase of the error current signal I_{FBL}.

Since the feed-forward circuit 201 is enabled, the on-off states of switches K1 and K2 are opposite. When the switch K1 is off and the switch K2 is on, the integration capacitor C integrates the integration current lint and the feed-forward current Ic together, and generates the charge feedback signal Vch at one terminal thereof. When the switch K1 is on, the integration capacitor C is discharged to zero, and the integration current lint and the feed-forward current Ic are no longer integrated, such that the charge feedback signal Vch is clamped to a low level. It should be understood that duration of integration is controlled by controlling the on- off state of the switch K1. Further, the switch K1 is turned off when the power transistor Q1 is turned on, and is turned on when the power transistor Q1 is turned off. That is, the switch K1 is controlled based on the inverse signal of the driving signal HG Further, the switch K2 is controlled based on the driving signal HG The switch K2 is turned on when the power transistor Q1 is turned on, and is turned off when the power transistor Q1 is turned off. Therefore, the capacitor C generates the charge feedback signal Vch only when the driving signal HG is at a high level. When the driving signal HG is at a low level, the charge feedback signal Vch is clamped to a low level until the power transistor Q1 is turned on in the next switching cycle. As an alternative embodiment, it should be understood that the control of the switches K1 and K2 may be implemented in various manners, and any control manner that can achieve the same function is applicable to this embodiment. In addition, the integration of the resonant current when the power transistor Q2 is on is also applicable. In this case, the feed-forward current Ic flows out of the integration capacitor C. That is, the feed-forward circuit 201 includes a controlled current source and a switch connected in parallel between the two terminals of the integration capacitor C. Other principles are basically the same as above, and are not described here.

In an embodiment, the driving control circuit 204 includes a comparison circuit and a driving circuit 32. The comparison circuit is configured to generate a signal for controlling the power transistor Q1 to be turned off, and the power transistor Q1 is turned on immediately after the power transistor Q2 is turned off for the dead time. It should be understood that if the resonant current is integrated when the power transistor Q2 is on, the comparison circuit generates a signal for controlling the power transistor Q2 to be turned off. In this embodiment, the comparison circuit includes a first comparator cmp1 having a first input terminal (e.g., the non-inverting input terminal) for receiving the charge feedback signal Vch, and a second input terminal (e,g., the inverting input terminal) for receiving the first threshold signal Vk generated by the conversion circuit 203 according to the error current signal I_{FBL}. When the charge feedback signal Vch increases to be greater than the first threshold signal Vk, the first comparator cmp1 generates an effective reset signal rst. The driving circuit 32 controls, based on the reset signal rst, the driving signal HG to switch from an active level to an inactive level, such that the power transistor Q1 is turned off. The driving circuit 32 controls, immediately after the power transistor Q1 is turned off for the dead time, the power transistor Q2 to be turned on. It should be understood that since the resonant current is integrated in only a half of the switching cycle, the driving control circuit 204 includes a timing circuit for timing a time period during which the power transistor Q1 is on. The power transistor Q2 is controlled to be turned off when the duration in which the power transistor Q2 is on is equal to the duration during in the power transistor Q1 is on, and then the power transistor Q1 is controlled to be turned on when the dead time elapses, and so on.

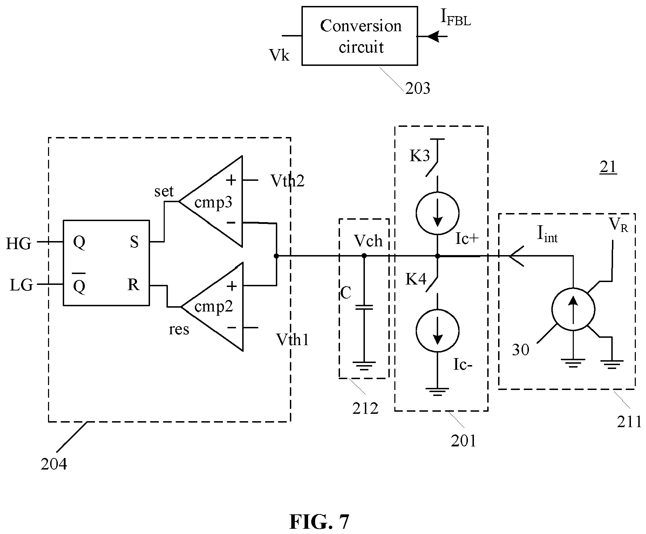

FIG. 7 is a schematic block diagram illustrating a second example control circuit according to an embodiment of the present disclosure. An element with the same circuit structure as that in FIG. 2 has the same reference numeral. In each switching cycle, the current integration circuit 211 integrates the resonant current I_{R} in the entire switching cycle as an example for description. In the first mode, that is, until the first threshold signal Vk decreases to a minimum value, the integration current lint is integrated in each switching cycle to generate a charge feedback signal Vch. In the second mode, that is, when the first threshold signal Vk decreases to the minimum value (e.g., since the error current signal I_{FBL} is greater than the second current I_{FBL2}), in each switching cycle, the control circuit 21 performs the feed-forward compensation for the resonant current IR during the switching cycle, such that the integration current lint representing the resonant current I_{R} and the feed-forward current Ic are integrated together to generate a charge feedback signal Vch.

Specifically, the current sampling circuit 211 includes a voltage-controlled current source 30 whose connection and function are the same as those in the previous embodiment. The current integration circuit 212 includes an integration capacitor C. A first terminal of the integration capacitor C is connected to the output terminal of voltage-controlled current source 30, and a second terminal of the integration capacitor C is connected to the reference ground. The feed-forward circuit 201 is also enabled when the error current signal I_{FBL} is greater than second current I_{FBL2}. The difference from the previous embodiment is that the feed-forward circuit 201 in this embodiment shown in FIG. 7 includes a first controlled current source and a second controlled current source, both of which generate the feed-forward current Ic. As described above, both the first and second controlled current sources are controlled based on the error current signal I_{FBL} to generate the feed-forward current Ic that increases as the error current signal I_{FBL} increases. Here, for the convenience of description, the feed-forward current generated by the first controlled current source is described as Ic+, and the feed-forward current generated by the second controlled current source is described as Ic-, both of which have the same value. Specifically, the first controlled current source is connected to a switch K3 in series between the internal power supply and the first terminal of integration capacitor C, so as to generate the feed-forward current Ic+ flowing into the integration capacitor C when the switch K3 is on, thereby speeding up the integration of the integration current lint in the forward direction to control the power transistor to reach the shutdown threshold faster. The second controlled current source is connected in series with the switch K4 to form a branch, and the branch is connected in parallel with the integration capacitor C, so as to generate the feed-forward current Ic- flowing out of the integration capacitor C when the switch K4 is on, thereby speeding up the integration of the integration current lint in a negative direction to control the power transistor to reach the conduction threshold faster. The on-off states of the switches K3 and K4 are opposite, the switch K3 is controlled based on the driving signal HG, and the switch K4 is controlled based on the driving signal LG

The driving control circuit 204 includes a comparison circuit and an RS flip-flop, and the difference from the previous embodiment is that the comparison circuit in this embodiment shown in FIG. 7 is configured to generate signals for controlling the power transistor Q1 to turn on and off, respectively. The comparison circuit includes a second comparator cmp2 and a third comparator cmp3. The first input terminal (e.g., the non-inverting input terminal) of the second comparator cmp2 receives the charge feedback signal Vch, and the second input terminal (e.g., the inverting input terminal) of the second comparator cmp2 receives the second threshold signal Vth1. When the charge feedback signal Vch increases to be greater than the second threshold signal Vth1, the second comparator cmp2 outputs an effective reset signal res, such that the power transistor Q1 is turned off. The first input terminal (e.g., the non-inverting input terminal) of third comparator cmp3 receives the third threshold signal Vth2, and the second input terminal (e.g., the inverting input terminal) of the third comparator cmp3 receives the charge feedback signal Vch. When the charge feedback signal Vch decreases to be less than the third threshold signal Vth2, the third comparator cmp3 outputs a valid set signal set so as to control the power transistor Q1 to be turned on. The comparison circuit controls the action range (e.g., the window of the charge feedback control) of the charge feedback signal Vch by setting two threshold signals. The second threshold signal Vth1 and the third threshold signal Vth2 both are generated based on the first threshold signal Vk generated by the conversion circuit 203. In an embodiment, the second threshold signal Vth1 is the sum of a bias signal Vcm and the first threshold signal Vk (i.e., Vth1=Vcm+Vk), and the third threshold signal Vth2 is the difference between the bias signal Vcm and the first threshold signal Vk (i.e., Vth2=Vcm-Vk). The bias signal Vcm is used to provide a direct current bias to the charge feedback signal Vch and the first threshold signal Vk, such that the charge feedback signal Vch varies within a predetermined range. In an embodiment, the bias signal Vcm is generated by sampling the input voltage Vin of the resonant converter. For example, the bias signal Vcm is equal to half of the input voltage Vin, that is, Vcm=1/2Vin. In other embodiments, the bias signal may be provided by other power supplies within the circuit so as to meet application requirements.

In this embodiment, the driving control circuit 204 includes an RS flip-flop. The RS flip-flop has a set terminal S for receiving a set signal set, and a reset terminal R for receiving a reset signal res, to generate the driving signals HG and LG for controlling the power transistors Q1 and Q2 respectively. It should be understood that, in order to enhance the driving capability, the driving control circuit 204 may further include a logic circuit or other circuit between the output terminal of the RS flip-flop and the control terminal of the power transistor so as to better control the switching circuit.

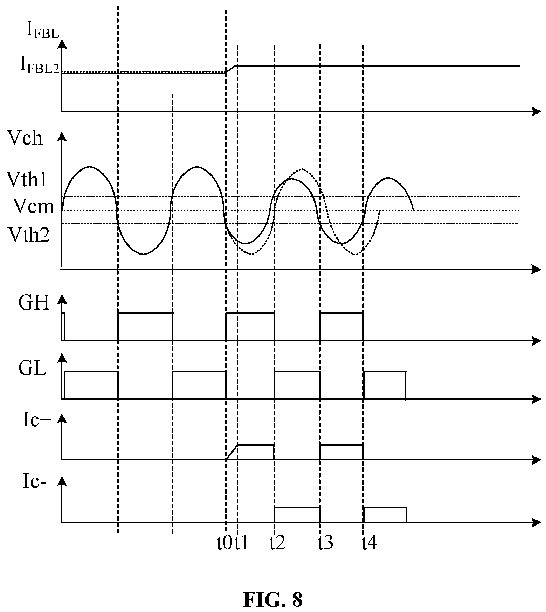

FIG. 8 is a diagram illustrating an example operation waveform of the second example control circuit according to an embodiment of the present disclosure. As shown in FIG. 8, until a time instant t0, the error current signal I_{FBL} is not greater than the second current I_{FBL2}, and thus the feed-forward compensation is not performed. That is, the feed-forward currents Ic+ and Ic- are both zero. Only the integration current representing the resonant current is integrated to generate the charge feedback signal Vch, which is to be compared with the second threshold signal Vth1 and the third threshold signal Vth2 so as to control the on-off states of the power transistors Q1 and Q2.

At the time t0 instant, the charge feedback signal Vch decreases to the third threshold signal Vth2, the driving control circuit generates an effective set signal, to control the driving signal GH to switch from a low level to a high level and control the driving signal GL to switch from a high level to a low level (where the dead time is not considered). During a time period from t0 to t1, the error current signal I_{FBL} increases to be greater than the second current I_{FBL2}. Since the switch K3 is controlled to be turned on during this time period, the feed-forward current Ic+ acts on the integration capacitor C together with the integration current lint. It can be seen from FIG. 8 that THE feed-forward current Ic+ increases with the increase of the error current signal I_{FBL}. In addition, the error current signal I_{FBL} increases until the time instant t1, and then remains unchanged, so that the feed-forward current Ic+ also remains unchanged.

After that, the charge feedback signal Vch decrease to the minimum value and then increases. Due to the addition of the feed-forward current Ic+, the charge feedback signal Vch increases to the second threshold signal Vth1 (at a time instant t2) faster than the case of no feed-forward current. At this time instant, the driving control circuit generates a reset signal to control the driving signal GH to switch from a high level to a low level, and control the driving signal GL to switch from a low level to a high level. The dotted line in the FIG 8 shows the waveform of the charge feedback signal Vch without the feed-forward compensation, and the solid line shows the waveform of the charge feedback signal Vch with the feed-forward compensation. It can be seen that after the feed-forward compensation is added, the charge feedback signal Vch reaches the second threshold signal Vth1 faster than before the addition of the feed-forward compensation, and thus the switching frequency is increased. It also can be seen that the time period during which the driving signal GH remains at the high level is significantly shorter than that in the previous cycle.

Since the time instant t2, the feed-forward current Ic- starts to act, and acts on the integration capacitor C together with integration current lint. The charge feedback signal Vch increases to the maximum value and then decreases. At a time instant t3, the charge feedback signal Vch decreases to the third threshold signal Vth2. At this time instant, the driving control circuit generates a set signal to control the driving signal GH to switch from a low level to a high level, and control the driving signal GL to switch from a high level to a low level. The dotted line in the FIG. 8 shows the waveform of the charge feedback signal Vch without the feed-forward compensation. It can be seen that the addition of the feed-forward current Ic- facilitates the decrease of the charge feedback signal Vch to the third threshold signal Vth2, thereby increasing the switching frequency. It can be seen from the FIG. 8 that the time period during which the driving signal GL remains at the high level is significantly shortened compared with that in the previous cycle. In summary, the control circuit maintains the output power by adding the feed-forward compensation to increase the switching frequency when less output power is required, such that the control circuit also smoothly transitions from the charge control mode to the equivalent frequency control mode.

The above embodiments take the half-bridge LLC resonant converter as an example. Those skilled in the art should understand that the resonant converter is not limited to the half-bridge topology, and the full-bridge resonant converter is also applied. In addition, the resonant unit is not limited to the LLC, and other resonant units such as LCC are also applicable.

In the embodiments of the present disclosure, the resonant current is sampled and sent to the control circuit for integration so as to control the charge of the resonant converter, and the feed-forward current is introduced and integrated together with the sampled resonant current. Therefore, when the output power the minimum output power due to the charge control, the output power is further reduced, such that the resonant converter smoothly transitions from the charge control to the equivalent frequency control, which further improves the system efficiency and can realize the application of a wide output range.

Merely preferred embodiments of the present disclosure are described above and are not intended to limit the present disclosure. Those skilled in the art can make various modifications and variations to the present disclosure.

## Claims

1. A control circuit for a resonant converter, comprising:
a feed-forward circuit configured to generate a feed-forward current;
a charge feedback circuit configured to receive a resonant current sampling signal representing a resonant current of the resonant converter to generate a charge feedback signal in a first mode, and receive the resonant current sampling signal and the feed-forward current to generate the charge feedback signal in a second mode; and
a driving control circuit configured to generate a driving signal based on the charge feedback signal and a first threshold signal, to control an on-off state of a power transistor in the resonant converter, wherein the first threshold signal is generated based on an error compensation signal representing error information between a feedback signal of an output signal of the resonant converter and a reference signal.

2. The control circuit according to claim 1, wherein in the first mode,
the feed-forward circuit is configured to not generate the feed-forward current, and the control circuit is configured to operate in a charge control mode to adjust an output power of the resonant converter by changing an input charge of the resonant converter, wherein a switching frequency of the resonant converter remains unchanged.

3. The control circuit according to claim 1, wherein in the second mode,
the feed-forward circuit is configured to be enabled to generate the feed-forward current, and the control circuit is configured to operate in an equivalent frequency control mode to adjust an output power of the resonant converter by changing a switching frequency of the resonant converter.

4. The control circuit according to claim 1, wherein
the control circuit is configured to operate in the first mode until the first threshold signal decreases to a minimum value; and
the control circuit is configured to operate in the second mode when the first threshold signal reaches the minimum value.

5. The control circuit according to claim 1, wherein the feed-forward current changes inversely to the error compensation signal, such that a value of the feed-forward current increases as a desired output power decreases.

6. The control circuit according to claim 1, further comprising:
a conversion circuit configured to receive an error current signal representing the error compensation signal transmitted from a secondary side of the resonant converter, and generate the first threshold signal based on a corresponding relationship.

7. The control circuit according to claim 6, wherein the conversion circuit is configured to generate the first threshold signal based on a preset power curve related to the error current signal.

8. The control circuit according to claim 6, wherein the conversion circuit is configured to convert the error current signal into a voltage signal, and generate the first threshold signal based on a preset power curve related to the voltage signal.

9. The control circuit according to claim 6, wherein the conversion circuit is configured to generate a compensation signal based on an error between the error current signal and the reference signal, and generate the first threshold signal based on a preset power curve related to the compensation signal.

10. The control circuit according to claim 6, wherein
the first threshold signal remains unchanged in a case that the error current signal is smaller than a first current;
the first threshold signal decreases as the error current signal increases in a case that the error current signal is greater than the first current and smaller than a second current, and decreases to a minimum value when the error current signal is equal to the second current; and
the first threshold signal remains at the minimum value in a case that the error current signal is greater than the second current.

11. The control circuit according to claim 6, wherein in a case that the error current signal is greater than a second current, the feed-forward current increases as the error current signal increases until the error current signal increases to a maximum error current, wherein the second current is a value of the error current signal when the first threshold signal decreases to a minimum value.

12. The control circuit according to claim 1, wherein the charge feedback circuit comprises:
a current sampling circuit configured to receive the resonant current sampling signal representing the resonant current of the resonant converter and convert the resonant current sampling signal into an integration current; and
a current integration circuit configured to integrate the integration current and the feed-forward current to generate the charge feedback signal.

13. The control circuit according to claim 12, wherein the current integration circuit is configured to:
integrate the integration current during half of each switching cycle in the first mode; and
integrate the integration current and the feed-forward current during half of each switching cycle in the second mode.

14. The control circuit according to claim 13, wherein the current integration circuit is configured to:
integrate the integration current and the feed-forward current to generate the charge feedback signal across an integration capacitor during half of the switching cycle in the second mode; and
control the integration capacitor to discharge to zero during the other half of the switching cycle in the second mode.

15. The control circuit according to claim 14, wherein the power transistor comprises a first power transistor and a second power transistor, and wherein in the second mode,
in a case that the integration current and the feed-forward current are integrated in a time period during which the first power transistor of the resonant converter is on, the feed-forward current flows into the integration capacitor; and
in a case that the integration current and the feed-forward current are integrated in a time period during which the second power transistor of the resonant converter is on, the feed-forward current flows out of the integration capacitor, wherein the first power transistor and the second power transistor are connected in series between an input terminal and reference ground.

16. The control circuit according to claim 12, wherein the current integration circuit is configured to:
integrate the integration current during the switching cycle in the first mode; and
integrate the integration current and the feed-forward current during the switching cycle in the second mode.

17. The control circuit according to claim 16, wherein the power transistor comprises a first power transistor and a second power transistor, and wherein in the second mode,
in a time period during which the first power transistor of the resonant converter is on, the feed-forward current generated by the feed-forward circuit flows into the integration capacitor; and
in a time period during which the second power transistor of the resonant converter is on, the feed-forward current generated by the feed-forward circuit flows out of the integration capacitor, wherein the first power transistor and the second power transistor are connected in series between an input terminal and reference ground.

18. The control circuit according to claim 13, wherein the driving control circuit is configured to compare the charge feedback signal with the first threshold signal to generate a signal for controlling the power transistor in the resonant converter to turn off.

19. The control circuit according to claim 16, wherein the power transistor comprises a first power transistor and a second power transistor, and wherein the driving control circuit is configured to:
generate a signal for controlling the first power transistor in the resonant converter to turn off when the charge feedback signal increases to be greater than a second threshold signal; and
generate a signal for controlling the first power transistor to turn on when the charge feedback signal decreases to be less than a third threshold signal, wherein the second threshold signal is a difference between a bias signal and the first threshold signal, and the third threshold signal is a sum of the bias signal and the first threshold signal, and the first power transistor and the second power transistor are connected in series between an input terminal and reference ground.

20. A resonant converter, comprising:
the control circuit according to any one of claims 1 to 19;
a main power circuit comprising a first power transistor and a second power transistor connected in series between an input terminal and reference ground;
a transformer comprising a primary winding and at least one secondary winding;
a resonant capacitor coupled in series with the primary winding to form a resonant unit; and
an output feedback circuit configured to integrate and compensate an error between a charge feedback signal and a reference signal to generate an error compensation signal and transmit the error compensation signal to the control circuit.

21. The resonant converter according to claim 20, wherein the output feedback circuit comprises:
a transfer circuit configured to convert the error compensation signal into an error current signal and transfer the error current signal to the control circuit.

22. The resonant converter according to claim 20, further comprising:
a current acquisition circuit configured to acquire the resonant current sampling signal by connecting a resistor in series in the resonant unit.

23. The resonant converter according to claim 20, further comprising:
a current acquisition circuit, wherein the current acquisition circuit comprises a first capacitor and a first resistor connected in series to form a branch, and the branch is connected in parallel with the resonant capacitor of the resonant converter and is configured to generate the resonant current sampling signal on the first resistor, wherein a capacitance value of the first capacitor is smaller than a capacitance value of the resonant capacitor.
